(19) Europäisches Patentamt / European Patent Office / Office européen des brevets

(11) **EP 2 600 301 A1**

(12) **EUROPEAN PATENT APPLICATION**

(43) Date of publication:
**05.06.2013 Bulletin 2013/23**

(51) Int Cl.:
***G06Q 30/08*** (2012.01)

(21) Application number: **12194927.5**

(22) Date of filing: **29.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.11.2011 US 201113308491**

(71) Applicant: **SMD Leisure Limited
Lancaster Lancashire LA2 8DF (GB)**

(72) Inventors:
• **Carroll, Ryan
  Lancaster, Lancashire LA2 8DF (GB)**
• **Hammond, James
  Carlisle, MA 01741 (US)**

(74) Representative: **Wallin, Nicholas James et al
Withers & Rogers LLP
4 More London Riverside
London SE1 2AU (GB)**

(54) **A simulation**

(57)    An simulation system is disclosed. According to an aspect of the invention, a method of processing and multicasting information deficient data comprises a server receiving real time data from a first client and a second client; the server processing the received data set to provide a transmit data set; and the transmit data set is multicast by the server to the first client and the second client; wherein the transmit data set varies to converge with the received data set within a predetermined length of time, and the first and second clients are unable to calculate a current value for the received data set or predict a future value for the received data set using the transmit data set.

Fig. 14

**Description**

The invention relates to an online multiuser simulation and a method of processing data. More specifically, the invention relates to a market based simulation run on a server machine operated online involving a plurality of users, and a method of processing and multicasting information deficient data.

A simulation is operated by users over a computer network. The computer network may be an internet and typically the Internet. Computer networks can support from a single online user up to hundreds of thousands of online users.

Traditional market activities (and their variations) include the online trading of capital stock on a stock/equity market, commodities on a commodity market, or currency on a foreign exchange market. Each transaction on any such market has at least two parties and there is competition between the at least two parties and possibly a number of third parties also bidding for the transaction. Traditional market activities also include traditional online auctions of which there are numerous well known and long established online auction houses. Bidding fee auctions, also known as penny auctions, are also often performed online and earn an auctioneer money as any bidder pays a non-refundable fee to purchase a bid.

According to a first aspect of the invention, there is provided a system of operating a market based simulation run on a server machine operated online by a plurality of users, wherein each user buys points; the users compete to buy the most points; each user is provided with deficient points information; the deficient points information is a delayed and smoothed response of the combined total number of points bought by all the users; and a user is unable to calculate a value for the combined total number of points bought by all the users by analysing a set of previous deficient points information.

Each user, having the deficient points information cannot realise the current behaviour of the other user(s). Competing to have the most points is a skilful pursuit if the number of points held by the users is not up to date information. Any large purchase of points by one or more users is disguised by the smoothing of the total points response, thus requiring more skill to successfully play the simulation by the users. The users may play over the Internet allowing them to play against geographically dispersed opponents, but with no user having a related advantage or disadvantage.

Preferably, a user is unable to calculate a value for the combined total number of points bought by all the users by analysing a set of previous deficient points information.

A user has to make skilful assumptions to predict the behaviour of his fellow users as the bought points information is sufficiently deficient such that the user cannot identify the points information and thereby calculate the total number of points. Without a definite total number of points, a user can only estimate the points score of the other users using the deficient points information and behavioural characteristics of the other users.

Preferably, the simulation comprises a first round and a second round and the deficient points information is the combined total number of points bought by all the users in a single round. The division of the simulation into distinct rounds allows further complexity in the simulation to be provided. The cost of a point may be greater in the first round than the second round. This encourages different spending behaviours for buying points in different rounds. The behaviour can be manipulated to shape the users spending on points and also increase the enjoyment of the simulation to a user. The cost of a point in a single round may be above a predetermined lower limit and below a predetermined upper limit. This feature allows the points buying behaviour to be further controlled and the simulation becomes more tactical both inter and intra rounds. The cost of a point may increase as the number of points bought during the whole simulation, in a single round, or in a single purchase increases. These features discourage a user buying a large number of points at any time in the simulation. The features are not mutually exclusive.

Preferably, the simulation is won by a first user having most points at an end of the simulation and the number of points of the first user is within a predetermined number of points above the number of points of a second user with a next highest score. This feature discourages a user from outbidding his opponents by a large margin to win the simulation. When juxtaposed with the deficient information feature where the highest score of the users is not knows, the combined features require special skill and understanding to play the simulation.

The individual point score of all the users, except the leading point scorer, may be disoperated at the end of a round. This provides some context for each of the users encouraging them to play more as they have more information to base their decisions on. Preferable, the point score of the leading scorer is shown to a user if, in a following round, they increase their individual point score above that of the leading point score at the end of the previous round. This removes the extra advantage provided to the leader over the user at the end of the previous round.

Preferably, a winning user receives a monetary prize and the size of the monetary prize increases as the combined total number of points bought by all the users increases and each user is provided with deficient information of the size of the monetary prize. The users are encouraged to play and are also made aware of a quantitative size of the available prize, however, the users cannot use the prize size to deduce information about the total number of points bought, which isn't already provided by the deficient points information.

The simulation may also allow a user to sell a point to another user. This internal simulation market provides a further way to gain or use points. Selling points is a way to recoup points expenditure if a user is not likely to win, or for a user leading by a too large margin to reduce their lead.

There may be two type of points available in the simulation. The aforementioned points are a first type of point. A user may earn a second type of point by playing the simulation. The second type of point may be converted into the first type of point by a user during the simulation. The second type of points encourage repeat simulations to be operated as a user advantage over other users will increase as the user may utilise these second type of points unavailable to the other users, or not available in a same quantity. Preferably, the user may convert a number of the second type of point into the first type of point and the number of points converted provides the user with a joint-second highest point score. This provides the user with the converted points with an instant known position in the simulation. The user is rewarded for his investment in previous simulations.

According to a second aspect of the invention, there is provided a server machine comprising a microprocessor and storage medium storing a computer program, wherein the server machine is configured to: receive an instruction from a client machine to indicate that a user of the simulation is increasing their point score; update an internal points register from a first value to a second value using the client machine instruction; calculate an external points register value between the first value and the second value; and transmit the external points register value to the client machine; whereby the external points register value is a delayed and smoothed response of internal points register.

According to a third aspect of the invention, there is provided a method of processing and multicasting information deficient data, the method comprising: receiving at a server real time data from a first client and a second client; processing at a server the received data set to provide a transmit data set; and multicasting the transmit data set by the server to the first client and the second client; wherein the transmit data set varies to converge with the received data set within a predetermined length of time, and the first and second clients are unable to calculate a current value for the received data set or predict a future value for the received data set using the transmit data set.

The method provides the client systems with partial information relating to the received data set. The server calculation is performed prior to sending of information to any client system, therefore, any interception of the transmit data set will not allow a third party to gain information relating to the received data set, thus acquiring an advantage over a client of the server. The user has the information that the transmit data set is attempting to converge with the received data set and also the transmit data set information. Together a client can infer information about the received data set, but because of the unknown variable of the length of time in which the data sets will converge, the transmit data set cannot be used to predict the received data set.

Preferably, the server processing step comprises identifying the difference between a current received data set value and a current transmit data set value, calculating a rate of increase to apply to the current transmit data set value for the value to reach the current received data set value within a predetermined range of time, and calculating a step value to increase each subsequent transmit data set value by. The stepping method allows an efficient algorithm for controlling the current transmit data set value and thereby form the transmit data set. The rate of increase may be above a predetermined minimum rate. This further reduces the amount of information provided by the transmit data set and also enables an easier implementation of method.

The minimum rate of increase may be varied after a first predetermined time period. The altering of this variable further restricts the ability of a client or party to calculate a present or future received data set value using the transmit data set. Also, the characteristics of the transmit data set response to a received data set input will change with a different minimum rate of increase. The rate of increase may be one of a predetermined number of discrete rates of increase. Discrete rates of increase will further hide or disguise the received data value. The predetermined length of time may be varied after a second predetermined time period. This further disguises or hides the received data set. The first predetermined time period may be equal to the second predetermined time period. The altering of multiple variables at one time will disguise the effect that each variable has in shaping the transmitted data set.

The server and the first and second clients may communicate over a public network. The nature of the method is adapted for such a communications system as the interception of the transmit data set does not provide a received data set or value.

The method may further comprise a feedback system in which the transmit data multicast to the first and second clients affects the data received by the server from the first and second clients. This allows for a system where the clients independently affect the transmit data, thus one client can affect the data received by the server from the other client.

Preferably, the predetermined length of time taken for the transmit data set to converge with the received data set is private to the server. This ensures that the client device(s) cannot calculate an instantaneous value for the receive data set from a transmit data set value as the instantaneous value for the receive data set will not be transmitted to the client device(s).

The method is preferably for use in a simulation operated by a first user and a second user, where the real time data relates to points used to play the simulation, the received data set is a received points data set, the transmit data set is a transmit points data set, the first client is operated by the first user of the simulation, the second client is operated by the second user of the simulation and the first and second clients can buy points during the simulation; and

the method further comprising the transmit points data being disoperated by the first and second clients to the respective first and second users.

This simulation provides a market based simulation run on a server machine and operated online by a plurality of users using clients, wherein each user buys points, the users compete to buy the most points, each user is provided with deficient points information, and the deficient points information relating to the combined total number of points bought by all the users.

The invention will now be described, by way of example only, with reference to the accompanying drawings, in which:

Figure 1 is a view of a graphical user interface (GUI) of an embodiment of the simulation;
Figure 2 is a view of a GUI of another embodiment of the simulation;
Figure 3 is another view of the GUI of the embodiment of Figure 2;
Figure 4 is a view of a GUI of a further embodiment of the simulation;
Figure 5 is another view of the GUI of the embodiment of Figure 4;
Figure 6 is a view of a GUI of another further embodiment of the simulation;
Figure 7 is another view of the GUI of the embodiment of Figure 6;
Figure 8 is another view of the GUI of the embodiment of Figure 7;
Figure 9 is another view of the GUI of the embodiment of Figure 8;
Figure 10 is a view of a GUI of yet another further embodiment of the simulation;
Figure 11 is another view of the GUI of the embodiment of Figure 10;
Figure 12 is a flow diagram of a method of the simulation;
Figure 13 is a flow diagram of a further method of the simulation;
Figure 14 is a system diagram of a client and server arrangement of a first embodiment;
Figure 15 is a system diagram of the server of Figure 14; and
Figure 16 is a system diagram of a client terminal of Figure 14.

In the drawings, like parts are denoted by like reference numerals.

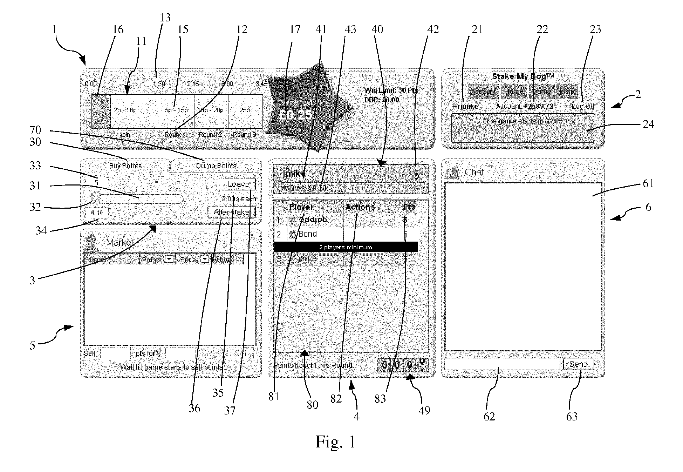

Figure 1 shows a view of the graphical user interface (GUI) of a simulation involving a number of users. The GUI is an example view of a user and comprises six boxes 1, 2, 3, 4, 5, 6. The user is competing against other users in a simulated market. Each box groups information, and/or interactive elements of different features corresponding to one or more embodiments of the invention.

The simulation info box 1 contains information relating to a simulation, the simulation control box 2 provides information outside the context of the simulation, the points box 3 provides a method to increase and decrease points by trading them with the simulating system (the house), the simulation status box 4 displays status information of the users of the simulation, the market box 5 provides a second method to increase and decrease points by trading them with other users, and the chat box 6 displays both private and public messages between the simulation, the user and the other users.

Each user of the simulation has different information, specific to them, being displayed on their own GUI.

A simulation timer 11 is shown in the simulation info box 1. The simulation timer 11 displays a timer for the simulation being operated. Simulation time markers 13, in minutes and seconds, are provided above the simulation timer 11. The simulation timer 11 represents time as a scale running from left to right along the timer. The total simulation time is divided into several discrete periods of time, referred to as rounds, which are represented on the simulation timer 11. This embodiment of the invention has an initial period of time for users to join the simulation (Join) followed by three further rounds (Round 1, Round 2 and Round 3). The name of a round is displayed below each period of time associated the round.

The simulation timer 11 displays the simulation time by use of a shaded section 16. The shaded section 16 expands from left of the simulation timer 11 to right to reflect the current simulation time. The right most extent of the shaded section corresponds to current simulation time in the same scale as the simulation time marker 13.

Information is displayed within each round section of the simulation timer 11 relating to a price or price range 15 for that round. The monetary values displayed inside each section of the simulation timer 11 indicate the price or price range that a "point" purchased from the house within that round will cost. For example, Figure 1 shows an embodiment in which Round 1 is associated with a price range 15 in pounds sterling of "5p - 15p" (five pence to fifteen pence). A point purchased from the house during Round 1 will cost from 5 pence up to 15 pence.

The price paid per point 35 increases from the lower value of the price range 15 to the upper value of the price range 15 as the number of points selected 33 increases.

A displayed current win value 17 is displayed within the simulation info box 1. The displayed current win value 17 reflects the amount of money a winning user of the simulation will receive once the simulation ends providing no user purchases any additional points. The value 17 reflects (but is not necessarily equal to) the total amount of money spent by all the users during the course of the simulation. The displayed current win value 17 is not an actual current win value (not shown in Figure 1). Instead, the displayed current win value 17 is delayed with respect to the actual current win value. The delaying of the value 17 is intentionally performed to increase the difficulty that any user faces in calculating the number of points that the other users (their opponents) have purchased.

In the embodiment shown in Figure 1, Round 1 begins when time equals 1 minute 30 seconds and ends when time equals 2 minutes 15 seconds. The simulation timer 11 shows a simulation end time of 3 minutes and 45 seconds as this is the end time of the final round (Round 3). The shaded section 16 of the simulation timer 11 is entirely in the simulation timer first section, which illustrates that the simulation is in the "Join" phase.

The simulation control box 2 provides information outside the context of the simulation being operated and provides controls relating to the simulation being operated. The simulation control box 2 displays the name of a current user 21, the balance 22 of the account belonging to the user, a button 23 enabling the user to exit the system between simulations, a simulation announcements display 24, and a number of other buttons to provide general help about the simulation, access to an account section of the user and to a home screen of the user.

The points box 3 is a first interface enabling a user to increase or decrease points. The box 3 has two tabs - "Buy Points" 30 and "Dump Points" 70 - each providing a separate interface. In Figure 1 the "Buy Points" tab is selected and a Buy Points interface is shown in the points box 3.

The Buy Points interface comprises a movable slider 32 on a points scale 31. The scale 31 represents a number of points which may be bought by the user from the house and the slider represents the number of points the user has selected to buy. The number of points selected 33 is disoperated in a numerical format above the slider 32. Below the slider 32 the price to be paid per point 34 is disoperated.

In the "Join" round the Buy Points interface also displays two buttons: "Leave" 37 and "Alter stake" 36. The "Leave" button 37 enables the user to leave the simulation. The "Alter stake" button 36 is operable to set the stake (the amount the user initially pays to play a simulation) to whatever value is set by the slider 32 when the button 36 is pressed.

Figure 1 shows an embodiment of a simulation in the "Join" round. In this round a user may purchase points to start the simulation with, change the number of points purchased to start the simulation with, or leave the simulation and receive a full refund for any points purchased.

The Buy Points interface is different in subsequent rounds to that of the Join Round. To purchase points in the Join Round a user selects a value on the points scale 31 using the slider 32 and clicks 'Alter stake' 36. The user's personal points total 42 will match the number of points purchased. For example, if the user selects twenty-five points with the slider and clicks 'Alter stake' 36, any previous transaction the user made in the Join round is cancelled (and refunded) and the user purchases twenty-five points.

The simulation status box 4 has three sub-groups of information: a user personal status group 40, simulation status group 80 and a displayed round points indicator 49.

The user personal status group 40 displays the user identity 41, a current personal points total 42, and the current total price 43 (the amount the user has paid for points).

The simulation status group 80 lists the users of the simulation and ranks them in descending points order. Each row of the list comprises the user identity 81, any actions 82 which the user has performed in the simulation, and information relating to the number of points 83 the user holds. The simulation status group 80 utilises a scroll bar (not shown) should the number of opponents be too great for their information to fit in the simulation status group 80.

In the embodiment of Figure 1 three users are displayed: "Oddjob", "Bond", and "jmike". A number of points 83 have been bought by the users 81, thus the displayed total round indicator 49 has begun to increase.

The displayed round points indicator 49 shows partial information relating to the total number of points all the users have purchased during the instant round of the simulation. At the end of each round, displayed round points indicator 49 is halted and reset to zero. The indicator 49 operates on a delay whereby each user only gains an indication of the total number of points bought during whichever round is being operated, but is not given information sufficiently up to date for each user to extablish the exact total of total points purchased during the round. In this embodiment, the total round points indicator 49 is represented by a two dimensional scrolling counter. In other embodiments other presentations may be possible. One important aspect, however, is that the information in the total round points indicator is deficient, in that it is not up to date.

The chat box 6 comprises a chat window 61 where messages from other users are displayed and also where system messages received from the simulation are displayed. The chat box 6 also includes an interactive text input box 62 in which users may enter text to send to other users and a send button 63 to send the entered message.

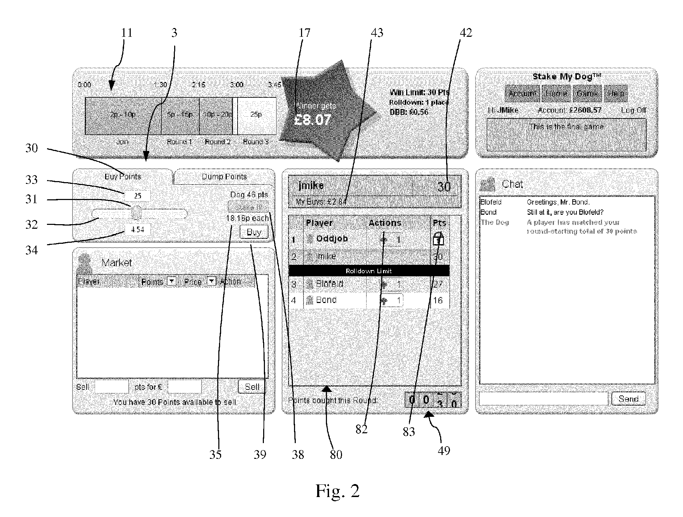

Figure 2 shows an embodiment of a simulation in Round 2. The simulation timer 11 shows that the simulation is near the end of Round 2. If no more points are purchased from the house, the winning user will receive £8.07, as shown by the displayed current win value 17.

The simulation status window 80 shows what the point total of each user was at the end of the previous round with exception of the user who had the most points at the end of the previous round. The points score of the user who had most points at the end of the previous round is obscured (by a lock icon in this embodiment) and is only revealed to a user if the user's personal points total 42 exceeds the score of the user who had the most points at the end of the previous round.

The simulation status window 80 displays an icon in the user actions 82 column to represent the number of times that each user buys points in any round.

In Figure 2, the user identified in the GUI as 'jmike' has set the point purchase slider 32 to buy twenty-five points which will cost £4.54 (34). The sale will complete when the 'Buy' button 39 is clicked. The user already has a total of 30 points at a total cost of £2.84 (43). Three other users are identified in the simulation status group: Oddjob, Blofeld, and Bond. Each other user is shown to have purchased points once during the instant round (Round 2). The displayed points bought in round indicator 49 indicates that the total of these three purchases by the other users to total at least 30 points. The displayed points bought in round indicator 49 does not show how many of those points were purchased by each other user, nor actual instant total number of points that have been purchased during the round.

Further embodiments (not shown) may have different rules for the buying of points from the house. As example, any of the following rules may apply: the price to buy points from the house is different for one or more users compared to one or more other users at predetermined times during a simulation; the average price for buying points from the house is the same on average for each user throughout a complete simulation; different users pay different amounts for different types of house points throughout the simulation and a first user buys only a first type of points from the house and a second user buys only a second type of points from the house, wherein sets of one type of points, for example "red", cost a fraction, for example ½, of sets of another type of points, for example "green"; in simulations with different types of point, the price paid per point differs for different point types dependent upon the fraction of the total points in the simulation represented by the type of point being purchased in a transaction, how the fraction has changed as a result of a previous number of transactions transactions, what fraction of a user's point total is represented by the type of point in the transaction, and/or how this fraction has changed during a preceding amount of time; and/or the price for purchasing points from the house is dependent upon the number of points in that transaction, the total number of points owned by all users of the simulation, how recently a given user last purchased points from the house, how recently any user last purchased points from the house, and/or whether a transaction of a user would be for more or fewer points than the user's previous transaction.

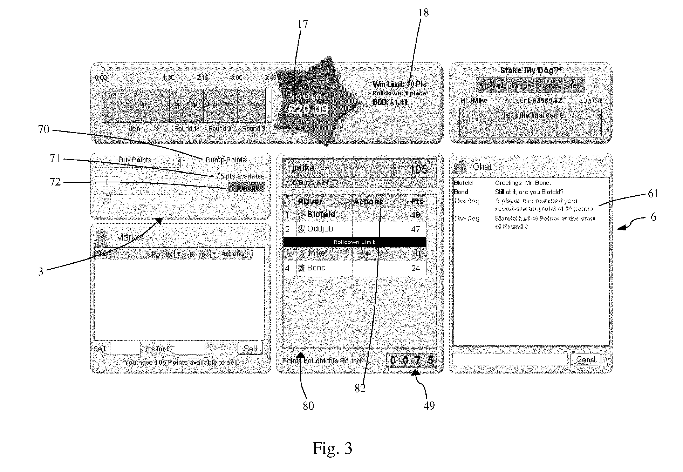

Figure 3 illustrates a possible event leading from the simulation shown in Figure 2. The simulation is in Round 3, which is the final round.

In this example a constraint is applied that it is not possible for a user to win the simulation, and therefore the pot, by simply buying more points than any other user can afford. To enforce this constraint a parameter called a win limit 18 is shown in the simulation info box. The win limit 18 is the maximum difference between the highest and second-highest users' totals at the end of the final round that will allow the user with the highest total to win. If the difference in points exceeds the win limit, the user with the highest point total at the end of the simulation will not receive the win value 17.

A user can discard any points which were bought during a round before the round ends. The discarded points are returned to the house for no refund. A dump points interface is accessible via the "Dump Points" tab 70 of the points box 3. A movable slider on a sliding scale is operable by the user to select the amount of points to be dumped. The number of points that are selected to be dumped are displayed above the movable slider. The total number of points which may be dumped 71 is shown by the dump points interface. Once a user selects a suitable value, he presses the "Dump!" button 71 on the dump points interface and the selected number of points are dumped.

The user GUI of jmike shown in Figure 3 illustrates that the user known as jmike purchased seventy-five points during Round 3. The entry in the user actions column 82 shows that the user has completed two separate purchases and the displayed round points indicator 49 shows that seventy-five points were bought in the round.

Jmike's points total exceeds the previous round leader's total at the end of the previous round enabling jmike to see the exact total that the leader (Blofeld) had at the end of the previous round (Round 2) shown in the points column of the simulation status group 80. From the available information, the user known as jmike is able to conclude that his total number of points is greater than the win limit 18 above the second highest scoring user. Jmike will not win any of the pot if this points difference continues until the end of the simulation. Jmike has the option of dumping some or all of the points which he purchased during the round (Round 3), i.e. dumping between 1 and 75 points, in an attempt to bring his own points total down to a value of no more than 30 points (the win limit 18) above the second-place user's points total.

In a further embodiment, a minimum and/or maximum number of points that a user may dump in any transaction is set.

The chat window 61 of the chat box 6 displays messages sent from two users to all of the users (user public messages), and also status messages sent by the simulation to only the chat window 61 of the jmike user (simulation private messages).

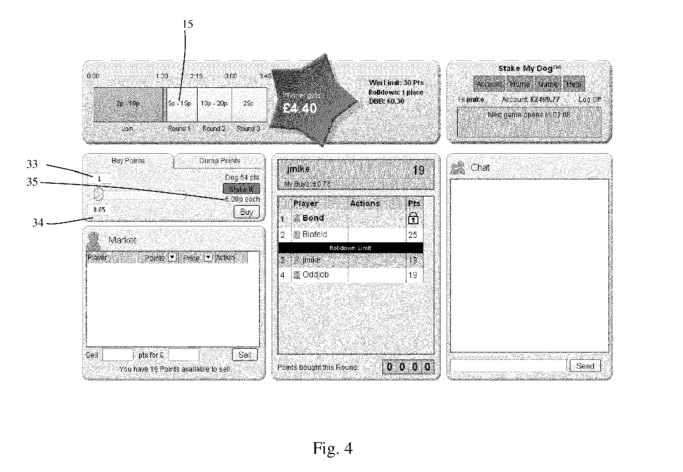

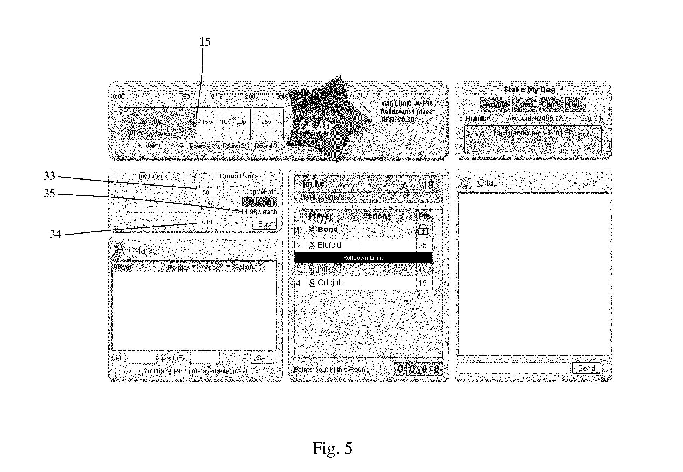

Figures 4 and 5 illustrate that the price-per-point 35 of a transaction differs during a single round based on the number of points 33 that form the transaction. The price of each point bought from the house increases as the number of points bought from the house increases. In one embodiment, the price of points varies depending on the number of points bought in any single transaction. For example, if the price-per-point in a round is shown as 10p-25p, a user could buy 1 point for 10 pence, or 20 points at 25p apiece for 5 pounds (500 pence).

Both Figure 4 and Figure 5 show the simulation timer 11 in Round 1. Also, both figures indicate that the price-per-point 35 to purchase points from the house during Round 1 will be in the range between 5 pence and 15 pence (15). Figure 4 shows the user selecting to buy one point 33 from the house at 5.00 pence each 35 costing a total of 0.05 pounds 34 (5 pence). Figure 5 shows the user selecting to buy fifty points 33 from the house at 14.98 pence each 35 costing a total of 7.49 pounds 34 (7 pounds and 49 pence).

A user may buy/sell points from/to other users using the market box 5. In a particular embodiment of the invention, a user may only sell points using the market in a round in which they were bought. In a different embodiment of the invention, a user may sell points regardless of the round in which the points were bought. Further details of the ability of a user to sell points to another user are described below.

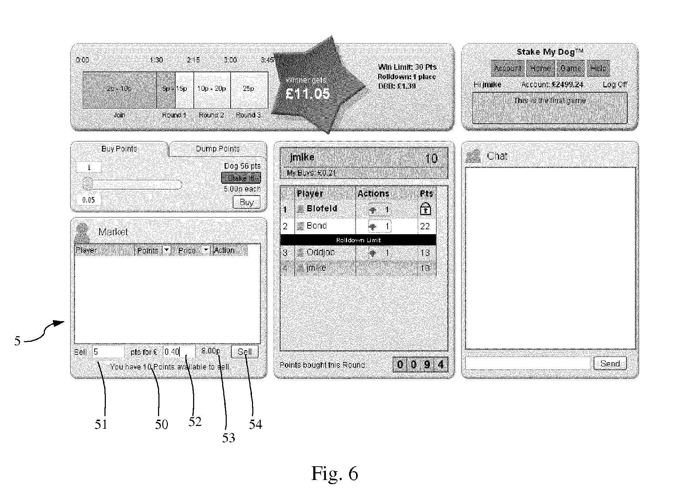

Figure 6 shows the market box 5 of a user. A field 50 in the market box 5 displays the number of points that the user has which he can sell. To sell points on the market, the user enters a number of points up to the maximum of the number of points available to be sold 50 in a "Sell" field 51. The user also enters an amount for the sale in a price field 52. The GUI will display a price-per-point-sold 53. To offer the points on the market, the user must confirm the sale by pressing a sell button 54. The user jmike has typed '5' in the Sell field 51, and '0.40' in the price field 52 to sell 5 points for a total of 40p to any other user. The Sell button has not yet been clicked to commit sale. The market box 5 displays a calculated price-per-point-sold 53 to be 8 pence.

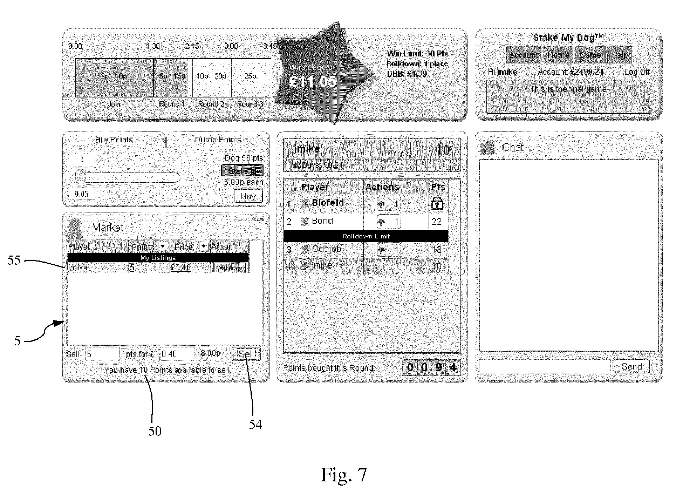

Figure 7 shows an embodiment of the invention where a user has put points on the market by pressing the sell button 54. The offer appears in the market window 5 of the user offering the sale in an offer-from-user line 55 containing the user name, the number of points on offer, the price for the points, and a button to allow the user who made the offer (the offeror) to withdraw the offer. In the other users market window 5, there is displayed a line corresponding to the offer-from-user line 55, but instead of a button to withdraw the offer, the other users will have a button to accept the offer and buy the points.

In Figure 7, jmike has clicked the Sell button 54 and points are offered to the other users. His offer appears in his market window 5 with a button allowing him to withdraw the offer.

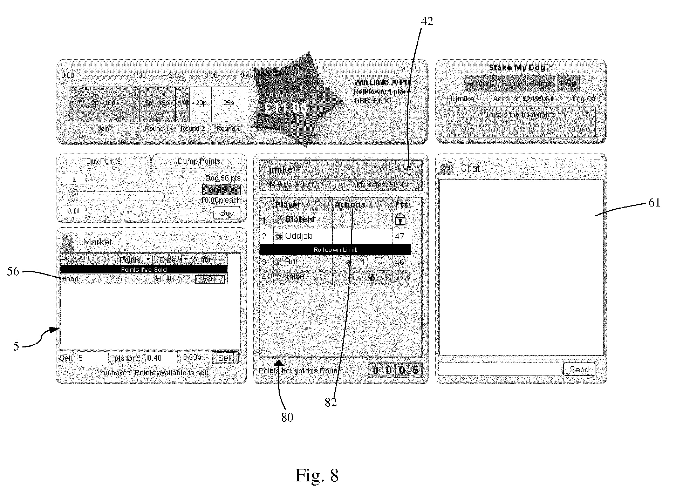

Figure 8 shows one embodiment of the invention when a user has accepted an offer to buy points from another user. The view is from the offeror. The offer-from-user line 55 of Figure 7 is replace by an offer-accepted line 56. The offer-accepted line 56 contains the user name, the number of points bought, the price paid for the points, and a "Sold" notification. The user actions column 82 has an icon against the buyer user name to indicate that the user has bought points and another icon against the seller user name to indicate that the user has sold points. The user actions 82 column displays icons against a user when the user buys, sells, or dumps points.

In Figure 8, the user known as Bond has bought points from jmike. The market offer-accepted line 56 shows that Bond purchased the points, a buy indicator shows on Bond's row in the simulation status group 80, a sell indicator shows on jmike's row in the simulation status group 80, and jmike's point total 42 is reduced.

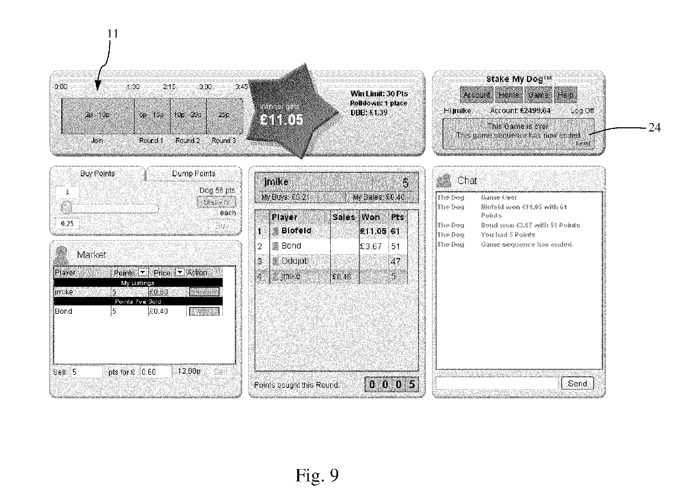

Figure 9 shows a finished simulation. The simulation is shown to be finished by the simulation timer 11, the simulation announcement display 24, and the chat window 61. In the simulation status group 80, each user is listed against their final point total, the amount of money made from point sales and the amount that they won.

The simulation info box 1 displays a "Rolldown" feature. Specifically, the rolldown feature comprises an integer displayed to a user. The rolldown is a consolation prize to the highest non-winning score(s) of (a) user(s). A rolldown pot is provided as a fraction of the total amount of money spent by all the users during the course of the simulation. The fraction of the pot that will be awarded and the number of runners-up who will share in the pot is determined by the simulation parameters. The users share in the rolldown pot as a fraction of their individual points totals. For example, if there are ten users in a simulation, the winner will get 60% of the total prize, while 30% will go into the rolldown to the next two users. If the top-scoring three users were user A with 101 points, user B with 100 points, and user C with 50 points, user A would get 60% of the pot for being the winner, user B would get 20% (2/3 of the rolldown) for being in second place with 100 points, and user C would get 10% (1/3 of the rolldown) for being in third place with 50 points.

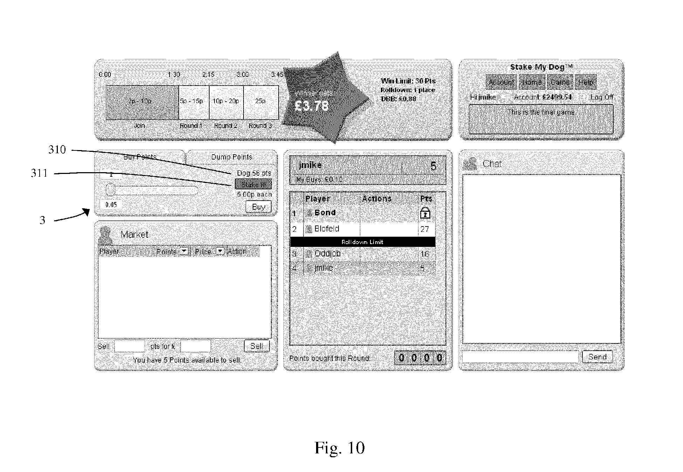

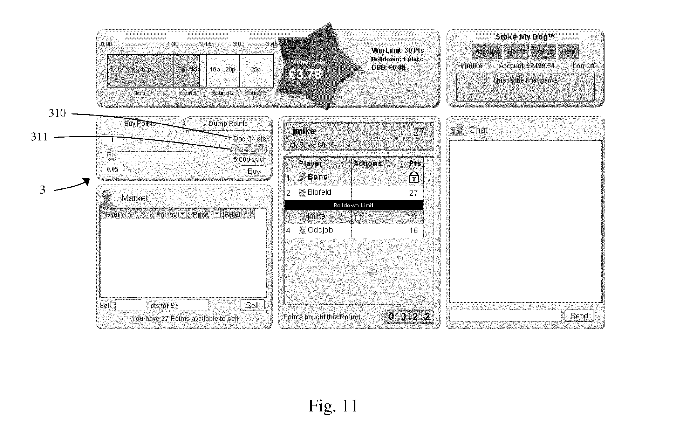

Figures 10 and 11 illustrate the use of dog points. The points box 3 contains a variable called Dog Points 310. Dog points are awarded to each user after each simulation as a percentage of the total number of points the user purchased during the simulation.

The percentage is usually between 1 and 10 %. Dog points belonging to a user may be used to increase the total number of points of the user when the user has fewer points than the second-place user. The simulation will add the user's dog points onto his current score up to the point at which the user is in joint second place. The user's Dog Points total 310 is decremented by the number of points which were added to their previous current simulation score. If the user does not have enough dog points to put them into tied second place, the user's total simulation score is incremented by his Dog Points total 310 and the Dog Points total is set to zero.

Dog points may be used by a user only once per simulation. Dog points are used when the user presses a "Stake it!" button 311. This button 311 is only available to be pressed when the user is in a position to use it.

Figure 10 shows that jmike currently owns 56 dog points, which have been earned during previous simulations, and the fact that the "Stake it!" button 311 is active shows that jmike is allowed to stake his dog points at this point in the simulation. Figure 11 shows jmike after clicking the "Stake it!" button. 22 points are added to his current point total to put him into a tie for second place. Also, a dog icon appears to show the other users that he has done so, and his new points total is displayed to all users. 22 points are subtracted from his dog points 310, and the "Stake it!" button 311 is deactivated for the rest of the simulation.

In another embodiment of the invention (not shown) one or more users can play their dog points more than once per simulation.

Other embodiments of the invention provide different numbers and timing of rounds, prices paid per point in each round, however, the values shown in Figure 1 have proven particularly popular.

The percentage of the win value that the winner will receive is also configurable. This includes details of how the pot is awarded: the fraction going to the house, the fraction going to the user with the highest point total, and a rule determining the percentage of the pot awarded to the runner(s)-up.

A maximum and minimum number of users may vary for embodiments different simulations. The maximum and minimum number of points that may be bought from the house in a single transaction, and the price per point (preferably, but not necessarily, a non-decreasing function of the number of points in the transaction) may also vary.

The ability of users to offer to sell points to other users may also vary, as may the minimum and maximum number of points making up any offer, and also the maximum number of offers a user may have outstanding at one time.

The "win limit", or maximum difference between the highest and second-highest users' totals that will allow the user with the highest total to win, should not be considered to be limited to any embodiment shown by the Figures.

In a further embodiment, a brief time delay (of variable length) is enforced between user actions.

In yet another embodiment, a user has the option to auction points on the market to other users. A reserve may be put on the points and the time for the auction may either be a fixed period or an amount of time configurable by the user.

A different embodiment provides that a user has the option to auction an amount of money using a reverse auction. The auction may include a minimum number of points purchased, with either a fixed or configurable amount of time allowed for the other users to offer points for the amount of money.

A further different embodiment provides that a user has the option to make one purchase of any amount of points, at a special fixed rate, during the joining round. The user using this option is not able to take further simulation actions until the simulation is over.

Different and/or additional features are possible in different specific embodiments. Such features are described below.

In one embodiment, instead of an indicator displaying the number of points bought in a present round 49, the indicator displays: a delayed counter showing the amount of money being spent on points by all the users, a measure of the current rate of point purchase by all users, and/or all the user's total point score (including the top points scorer's score) with a configurable time delay.

In another embodiment, an additional delayed points counters is displayed showing the total number of points purchased by the users who were among a top scoring group of users in the previous round.

In a further embodiment, two users have an option to merge their points to provide a single user with a point total equal to the sum of the two users' point totals, but the combined point total has an upper limit of a current highest publicly displayed points total on the simulation status group 80.

In a different embodiment, the user who started with more points than the other is the one who takes further actions on the part of the merged user, and payouts will be returned to the two users based on a function of the number of points they each had before the merger.

In a yet further embodiment, a user may switch, once per round, between the point counter showing everyone and the point counter only showing a top scoring group of users.

In yet another embodiment, the GUI may present the features of the simulation in any manner in order for them to be readable and/or interactable with a user.

Various modifications will be apparent to those skilled in the art.

The delayed total points counter is important as it provides feedback to the users of the simulation regarding the general movement in points in the simulation. The delayed aspect ensures that a users cannot calculate the score of the leading point scorer, thus depriving them of information and making the simulation more challenging.

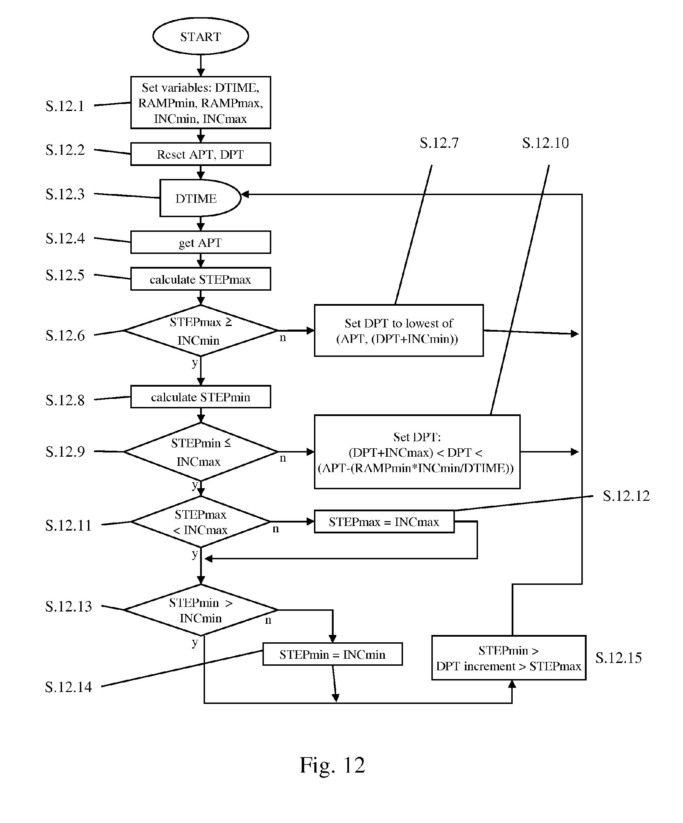

Figure 12 shows a first method of calculating a value to display to the users of the delayed total points bought in a round. When a new round begins, variables used to calculate the disoperated total points are set S.12.1 and a display point total (DPT) counter and an actual point total (APT) counter are reset to zero S.12.2 as no points may have been bought by any users of the simulation at this point in the round. The set variables are the delay step time (DTIME), minimum ramp time (RAMPmin), maximum ramp time (RAMPmax), minimum increment per delay step (INCmin) and maximum increment per delay step (INCmax).

A delay period (S.12.3) is complete and then the number of points bought from the house during the round by the users is updated.

A maximum step value (STEPmax) is calculated S.12.5

$$STEPmax = (APT\text{-}DPT)*RAMPmin/DTIME \qquad\qquad Eqn.\ 1$$

to add to the current display point total.

The STEPmax is calculated to ensure that the displayed point total does not increase too quickly and therefore converge with the actual point total too soon, which would make the display point total too accurate and less effective for the simulation.

The STEPmax is checked to ensure it is above a minimum value set by one of the previously entered variables (INCmin) S.12.6. If the STEPmax is too low, the display point total is set to the smallest of either the actual point total, or the current display point total plus a minimum increment value (one of the previously entered variables) S.12.7. The method begins again at the beginning of the delay period S.12.3.

A minimum step value (STEPmin) is calculated S.12.8

$$STEPmIN = (APT\text{-}DPT)*RAMPmax/DTIME \qquad\qquad Eqn.\ 2$$

to add to the current display point total. The STEPmin is calculated to ensure that the displayed point total does not increase too slowly and therefore converge with the actual point total too late, if at all. If the STEPmin is too small, the displayed point total may increase too slowly and, at worst, diverge from the current point total, which would make the display point total too inaccurate for the simulation to be operated properly.

The STEPmin is checked S.12.9 to ensure it is below a maximum value set by one of the previously entered variables (INCmax). If the STEPmin is too high, the display point total is set to a value between the current displayed point total plus maximum increment value (one of the previously entered variables), and the actual point total minus a minimum value calculated from the previously entered variables S.12.10. The method begins again at the beginning of the delay period S.12.3.

The algorithm used to choose the new value of DPT S.12.10 may vary. In one embodiment, the value of DPT is incremented by the smallest number in the sequence 1, 2, 4, 8, 16, 32, etc., i.e. $2^n$, such that the new value of DPT is greater than or equal to (DPT+INCmax) and less than or equal to (APT-(RAMPmin*INCmin/DTIME)). If no number in the sequence satisfies these constraints, the value of APT-(RAMPmin*INCmin/DTIME)) is used.

If the STEPmax is above a predetermined maximum increment per delay value S.12.11 (one of the previously entered variables), it is set to the predetermined maximum increment per delay value S.12.12.

If the STEPmin is below a predetermined minimum increment per delay value (one of the previously entered variables), it is set to the predetermined minimum increment per delay value S.12.14.

The DPT is then incremented S.12.15 by a value between STEPmin and STEPmax. The algorithm used to choose the integer value S.12.15 may vary. In a specific embodiment, a number of discrete values between STEPmax and STEPmin are selected. One of the discrete values is chosen based on the current difference between the APT and DPT. For example, if STEPmin is 1 and STEPmax is 10, the DPT is incremented by a value of 1 if the difference between APT and DPT is 5 or less, a value of 3 if the difference between APT and DPT is between 6 and 40, a value of 6 if the difference between APT and DPT is between 41 and 99, and to a value of 10 if the difference between APT and DPT is 100 or greater.

The method begins again at the beginning of the delay period and continues until the current round ends.

The above described first method of calculating a value to display to the users is set out below in pseudo-code.

1. Set values for parameters:

delay step time (DTIME)
minimum ramp time (RAMPmin)
maximum ramp time (RAMPmax)
minimum increment per delay step (INCmin)
maximum increment per delay step (INCmax)

2. Set the actual point total (APT) to zero and the displayed point total (DPT) to zero

3. Wait DTIME

4. APT = APT + number of points all users have bought from the house during this period of time

5. STEPmax = (APT-DPT)*RAMPmin/DTIME
If STEPmax is less than INCmin, set DPT to the smaller of APT and (DPT+INCmin) and skip to step (10)

6. STEPmin = (APT-DPT)*RAMPmax/DTIME
If STEPmin is greater than INCmax, set DPT to some integer value between (DPT+INCmax) and (APT-(RAMPmin*INCmin/DTIME)), and skip to step (10)

7. Set STEPmax to the smaller of STEPmax and INCmax

8. Set STEPmin to the greater of STEPmin and INCmin

9. Choose an integer value between STEPmin and STEPmax inclusive, and increment DPT by this value

10. Go to step (3)

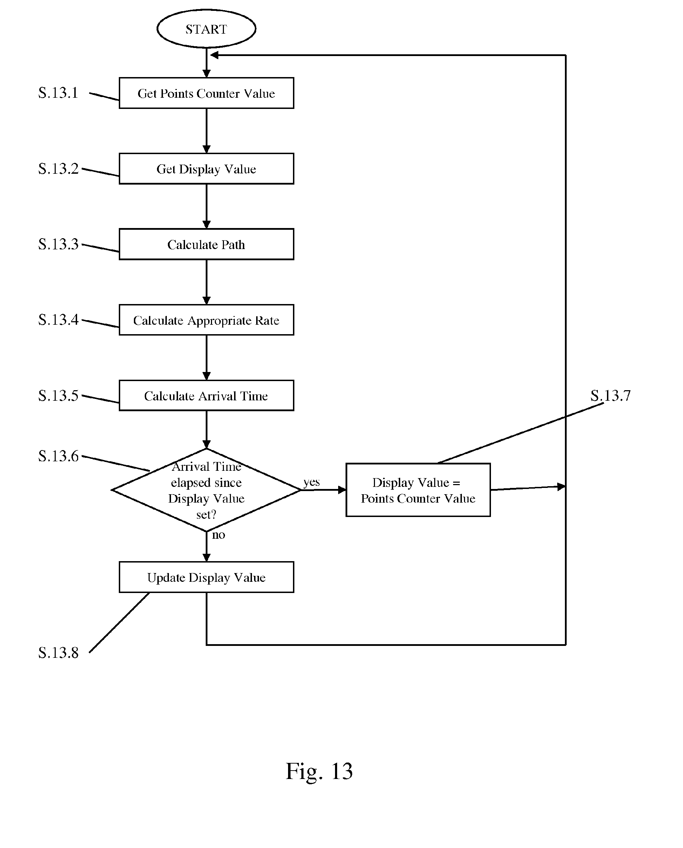

Figure 13 shows a second method for calculating a points value to display to a user of the simulation.
The Get Points Counter Value step S.13.1 calculates the number of points bought during a round being played. The Get Display Value step S.13.2 gets the current points value being displayed to users.
A path is the difference between the actual points bought in a round and the points value being displayed to the users, i.e. the points counter value minus the display value. This is calculated at the Calculate Path step S.13.3.

$$\text{path} = \text{actual points - display value} \qquad \text{Eqn. 3}$$

The Calculate Appropriate Rate step S.13.4 calculates an appropriate rate for the display value to increase at to ensure the display value will reach the actual points value within a predetermined range of time. The Calculate Appropriate Rate step method is set out below.
A minimum target time is a minimum amount of time, 5 seconds for example, that the displayed points value can take to reach the actual points value, while a maximum target time is a maximum amount of time, 15 seconds for example, that the displayed points value can take to reach the actual points value.
A minimal step is the minimum rate that the displayed points indicator should increase by, for example 1 point per second.
A speed coefficient, k, is calculated:

$$k = \text{maximum target time} \div \text{minimum target time} \qquad \text{Eqn. 4}$$

The rate, v, may be calculated using the formula:

$$v = \text{minimal step} \times \text{direction} \times k^{n} \qquad \text{Eqn. 5}$$

where the direction is either +1 or -1 dependent upon the polarity of the path and corresponds to the direction that a display counter will turn if it is implemented as a revolving counter; and n is a speed index.
The speed index n, is calculated using either an iteration method or a logarithmic equation. The iteration method starts with a speed index of 0 and increments the index until the calculated reach time is less than the maximum target time, i.e. until

$$path \div v > maximum\ target\ time \qquad \text{Eqn. 6}$$

The Calculate Arrival Time step S.13.5 calculates the amount of time that it will take for the delayed value to reach the counter value at the calculated appropriate rate, where

$$arrival\ time = path \div v \qquad \text{Eqn. 7}$$

If the arrival time has elapsed since the display value was last set, the display value is updated S.13.7 to be the actual points value of the number of points bought during the current round. If not, an Update Display Value step S.13.8 is implemented:

$$display\ value = actual\ points\ value \qquad \text{Eqn. 8}$$

The Update Display Value step S.13.8 calculates and updates the display value to be the calculated appropriate rate multiplied by the time elapsed since the display value was set, plus the last set display value.

$$display\ value = last\ set\ display\ value +$$
$$[appropriate\ rate\ (v) \times time\ elapsed\ since\ display\ value\ set] \qquad \text{Eqn. 9}$$

The methods of Figures 12 and 13 are run on a server. The methods are designed so that the delayed points total is calculated on the server side rather than a client side and any person who may examine the client-side code and communications between the server and client, and vice versa, cannot gain any playing advantage over another person who does not.

The displayed points total is designed to change the displayed points total at a standardised set of rates when the displayed points total approaches the actual points total. The above methods ensure that the rate at which the displayed points total converges with the actual points total does not allow the actual points total to be calculated. Also the methods ensure that the displayed points total does converge with the actual points total in a predetermined amount of time.

The above methods provide a displayed points value that disguises the actual points value due to, in a first method, an arbitrary selection of an increment of the displayed points and, in the preferred second method, having a set of standardised rates at which the displayed points value increases.

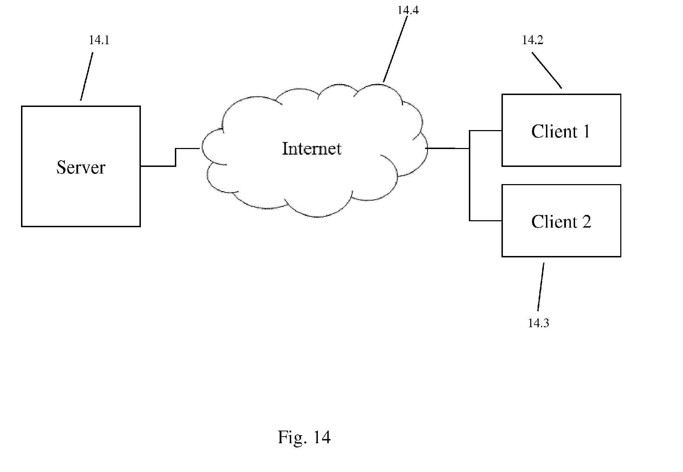

Figure 14 shows an arrangement comprising a server 14.1 and two client terminals 14.2, 14.3 arranged to communicate over the Internet 14.4. Not shown are any routers or firewalls, which may also be included. The client terminals 14.2, 14.3 communicate over the Internet 14.4 with the server 14.1. Data sent over the internet is not inherently secure, however, data may be encrypted prior to sending and decrypted when received to provide secure transmission. The simulation may be operated over the Internet in the manner shown in Figure 14. The simulation being run on a server 14.1 and users connecting to the server using client terminals 14.2, 14.3.

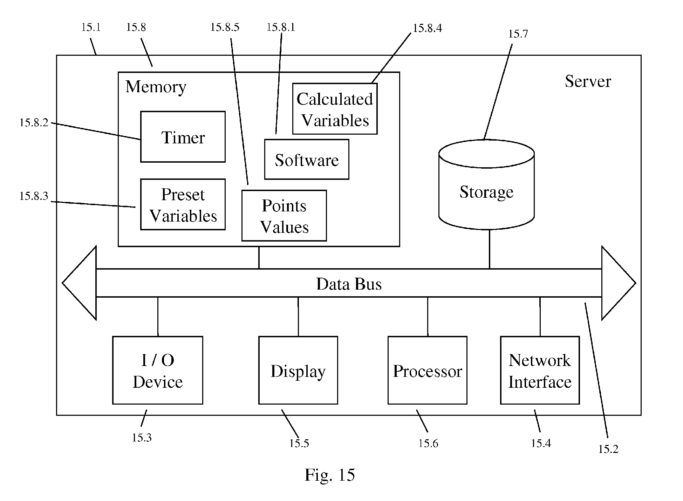

Figure 15 shows a system diagram of a server 15.1 for carrying out the server side of an embodiment of the invention. The server 15.1 is an exemplary server of the type shown in Figure 14. The system comprises a number of modules that communicate over a data bus 15.2. Data passes along the data bus to 15.2 and from modules connected to the data bus. An I/O device 15.3 is connected to the data bus 15.2 and provides a means for a user to interact with the modules of the system. The I/O device 15.3 may be a mouse, keyboard or similar. The network interface module 15.4 allows the system to send and receive data over a network (not shown). Such networks are LANs, WANs, the Internet or similar. The display 15.5 provides means for the user to view information regarding the system. A processor 15.6, or central processing unit, carries out instruction of a computer program to perform the basic arithmetical and logical operations. A storage module 15.7 is a non-volatile memory, a hard drive for example. The computer program may be stored in the storage module 15.7. The memory 15.8, usually volatile memory, can load computer programs from a storage module 15.7. The memory 15.8 also holds parameters and variables which are operated on by the processor module 15.6 under instruction from the computer program. The memory module 15.8 contains sub-modules. The software module 15.8.1 represents a computer program in a computer system's memory. The timer module 15.8.2 represents a timer implemented in the computer's memory. Also present in the computer's memory are preset variables 15.8.3 and calculated variables 15.8.4. The variables and timer information can be used by a computer program. The software 15.8.1 can use data received by the network interface 15.4 which was communicated to the memory 15.8 via the data bus 15.2. In a reverse manner, a computer program may transmit data over a network. The simulation may be run from the software 15.8.1 on the server 15.1 in the memory 15.8. The timer 15.8.2 is used to time simulations, rounds, etc. and the preset variables 15.8.3 are used by the software in its calculations. The points values 15.8.4 sub-module comprise a number of memory locations storing data related to each user's points, etc.

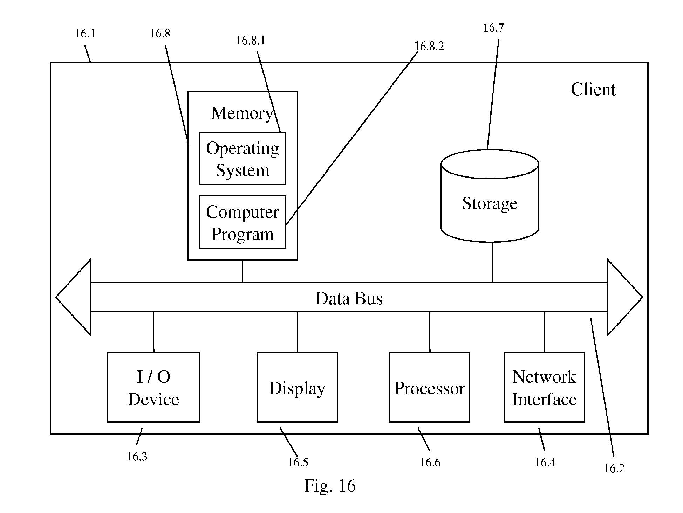

Figure 16 shows a system diagram of a client terminal 16.1 for carrying out the client side of an embodiment of the invention. The client 16.1 an exemplary client of the type shown in Figure 14 labelled as Client 1 and Client 2. The client 16.1 has a number of corresponding features with similar functions to the server of Figure 15. The client terminal 16.1 is shown running an operating system 16.8.1 in the client memory 16.8. The additional computer program 16.8.2 shown running in the memory 16.8 is software for the simulation. The computer program 16.8.2 enables a user of the client terminal to perform functions both locally on the client terminal, such as interacting with settings of the simulation, and publically over a network via the network interface 16.4, such as interacting with a server running the simulation software. The simulation running on the client machine 16.1 may send data to a server, such as that shown in Figure 15, over a network, such as the Internet. An embodiment of this arrangement is shown in Figure 14.

**Claims**

1. A method of processing and multicasting information deficient data, the method comprising:

    receiving at a server real time data from a first client and a second client;
    processing at a server the received data set to provide a transmit data set; and
    multicasting the transmit data set by the server to the first client and the second client; wherein
    the transmit data set varies to converge with the received data set within a predetermined length of time, and
    the first and second clients are unable to calculate a current value for the received data set or predict a future value for the received data set using the transmit data set.

2. The method of claim 1, wherein the server processing step comprises:

    identifying the difference between a current received data set value and a current transmit data set value;
    calculating a rate of increase to apply to the current transmit data set value for the value to reach the current received data set value within a predetermined range of time; and
    calculating a step value to increase each subsequent transmit data set value by.

3. The method of claim 2, wherein the rate of increase is above a predetermined minimum rate.

4. The method of claim 3, wherein the minimum rate of increase is varied after a first predetermined time period.

5. The method of any of claims 2 to 4, wherein the rate of increase is one of a predetermined number of discrete rates of increase.

6. The method of any of claims 1 to 5, wherein the predetermined length of time is varied after a second predetermined time period.

7. The method of claim 6 when dependent upon claim 4, wherein the first predetermined time period is equal to the second predetermined time period.

8. The method of any of claims 1 to 7, wherein the real time data from the first and second clients comprise discrete values which are summed to provide the received data set.

9. The method of any of claims 1 to 8, wherein the server and the first and second clients communicate over a public network.

10. The method of any of claims 1 to 9, further comprising a feedback system, wherein the transmit data multicast to the first and second clients affects the data received by the server from the first and second clients.

11. The method of any of claims 1 to 10, wherein the predetermined length of time taken for the transmit data set to converge with the received data set is private to the server.

12. The method of any of claims 1 to 11, wherein the method is for use in a simulation operated by a first user and a second user;
the real time data relates to points used to play the simulation;
the received data set is a received points data set;
the transmit data set is a transmit points data set;
the first client is operated by the first user of the simulation;
the second client is operated by the second user of the simulation;
the first and second clients can buy points during the simulation; and
the method further comprising the transmit points data is displayed by the first and second clients to the respective first and second users.

13. A server machine comprising a microprocessor and storage medium storing a computer program, wherein the server machine is configured to:

receive an instruction from a client machine to indicate that a user of the simulation is increasing their point score;
update an internal points register from a first value to a second value using the client machine instruction;
calculate an external points register value between the first value and the second value; and
transmit the external points register value to the client machine; whereby
the external points register value is a delayed and smoothed response of internal points register.

14. A system of operating a market based simulation run on a server machine operated online by a plurality of users, wherein
each user buys points;
the users compete to buy the most points;
each user is provided with deficient points information;
the deficient points information is a delayed and smoothed response of the combined total number of points bought by all the users; and
a user is unable to calculate a value for the combined total number of points bought by all the users by analysing a set of previous deficient points information.

15. The system according to claim 14, wherein the simulation comprises a first round and a second round, and the point score of the leading scorer is shown to a user if, in a following round, they increase their individual point score above that of the leading point score at the end of the previous round.

Fig. 1

Fig. 2

Fig. 3

Fig. 4

Fig. 5

Fig. 6

Fig. 7

Fig. 8

Fig. 9

Fig. 10

Fig. 11

Fig. 12

S.13.1 — Get Points Counter Value

S.13.2 — Get Display Value

S.13.3 — Calculate Path

S.13.4 — Calculate Appropriate Rate

S.13.5 — Calculate Arrival Time

S.13.6 — Arrival Time elapsed since Display Value set?

S.13.7

yes → Display Value = Points Counter Value

no

Update Display Value

S.13.8

Fig. 13

Fig. 14

Fig. 15

16.1　　16.8　　16.8.1　　16.8.2　　16.7

Client

Memory

Operating
System

Computer
Program

Storage

Data Bus

I / O
Device

Display

Processor

Network
Interface

16.3　　16.5　　16.6　　16.4　　16.2

Fig. 16

Europäisches Patentamt

European Patent Office

Office européen des brevets

# EUROPEAN SEARCH REPORT

**Application Number**

EP 12 19 4927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC, and in particular to a gaming scheme, being implemented on a conventional computer system, the use of which for carrying out non-technical processes (gaming scheme) forms part of common general knowledge and it was widely available to everyone at the date of priority of the present application (2011). No documentary evidence is therefore considered necessary. (See Official Journal EPO 11/2007, pages 592ff and 594ff)<br><br>----- | | INV.<br>G06Q30/08 |

**TECHNICAL FIELDS SEARCHED (IPC)**

G06Q

The present search report has been drawn up for all claims

| Place of search | Date of completion of the search | Examiner |
|---|---|---|
| Munich | 19 March 2013 | Reino, Bernardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)